# EUROPEAN PATENT APPLICATION

(11) **EP 4 775 420 A1**
(43) Date of publication of application: **15.07.2026**
(21) Application number: 24861755.7
(22) Date of filing: 07.08.2024
(51) Int. Cl.: B60H 1/32

(54) **THERMAL MANAGEMENT SYSTEM OF AIR CONDITIONER AND THERMAL MANAGEMENT METHOD**

(30) Priority: 07.09.2023 CN 202311151664; 07.09.2023 CN 202311151687
(71) Applicant: Zhejiang Zeekr Intelligent Technology Co., Ltd., Ningbo, Zhejiang 315899 (CN); Zhejiang Geely Holding Group Co., Ltd., Hangzhou, Zhejiang 310051 (CN)
(72) Inventor: WANG, Jian, Ningbo, Zhejiang 315899 (CN); XU, Junbo, Ningbo, Zhejiang 315899 (CN); XIA, Songyong, Ningbo, Zhejiang 315899 (CN); LIAO, Xingdong, Ningbo, Zhejiang 315899 (CN); ZHENG, Xingliang, Ningbo, Zhejiang 315899 (CN)
(74) Representative: Murgitroyd & Company
(86) International application number: PCT/CN2024/110287
(87) International publication number: WO 2025/050910

(57) **Abstract**

A thermal management system of an air conditioner, comprising: a main unit system, wherein the main unit system comprises an air conditioner main unit comprising an evaporator; a condensation system, wherein the condensation system comprises a condenser, and one end of the condensation system is communicated with the main unit system by means of a pipeline; and a compression system, wherein the compression system comprises a compressor, and the compression system is communicated with the main unit system and the condensation system by means of pipelines, respectively. When the thermal management system of the air conditioner works, the condensation system does not perform thermal exchange, the compressor provides thermal for the evaporator, and the evaporator uses the thermal to evaporate condensed water in the main unit system into water vapor. The system can be used for solving the problem in the prior art of odor generated due to the use of an air conditioner. Also disclosed is a thermal management method.

## Description

This application claims priority to Chinese Patent Application No. 202311151687.4, filed with the Chinese Patent Office on September 7, 2023 and entitled "TRIANGULAR CYCLIC THERMAL MANAGEMENT SYSTEM AND METHOD FOR VEHICLE AIR CONDITIONER". This application further claims priority to Chinese Patent Application No. 202311151664.3, filed with the Chinese Patent Office on September 7, 2023 and entitled "TRIANGULAR CYCLIC THERMAL MANAGEMENT SYSTEM AND METHOD FOR REMOVING BAD ODOR OF VEHICLE AIR CONDITIONER", both of which are incorporated herein by reference in their entireties.

### TECHNICAL FIELD

This application relates to the technical field of an air conditioner system, and in particular, to a thermal management system and a thermal management method for an air conditioner.

### BACKGROUND

Currently, in a refrigeration mode, a temperature of an air conditioner of a vehicle is suddenly reduced to be lower than the dew-point temperature. In this case, condensed water is easy to precipitate from the air, and is attached to a surface of an evaporator or drops into an air conditioner cabinet. As a result, the air conditioner cabinet is in a humid environment for a long time, causing mildew and bad odor. When a temperature of the refrigerant is around 0°C, microorganisms in the air are frozen on the surface of the evaporator. When the air conditioner system stops due to a compressor rotation speed being limited based on a control policy, a user operation or other factors, the microorganisms are thawed and are blown out with air outputted from the air conditioner, and the bad odor causes a user to feel uncomfortable.

According to the existing solution, an activated carbon filter is provided in front of the evaporator to adsorb bad odor. However, the solution can only absorb a part of the odor, and an absorption effect is not good.

### SUMMARY

In view of the foregoing disadvantages of the conventional art, a thermal management system and a thermal management method for an air conditioner are provided according to embodiments of this application, so as to resolve a problem in the conventional art that bad odor is generated when an air conditioner is turned on. This application provides a thermal management system of an air conditioner, and working stability of the system is improved by effectively increasing dryness of a main circuit.

An embodiment of this application provides a thermal management system for an air conditioner. The thermal management system includes: a host system, where the host system includes an air conditioner host including an evaporator; a condensing system, where the condensing system includes a condenser, and one end of the condensing system is in communication with the host system via a pipeline; and a compression system, where the compression system includes a compressor, and the compression system is in communication with the host system and the condensing system via a pipeline. When the thermal management system of the air conditioner works, the condensing system does not perform thermal exchange, the compressor provides thermal for the evaporator, and the evaporator converts, by using the thermal, condensed water in the host system into water vapor.

In an embodiment of this application, a first electronic expansion valve is arranged between the host system and the condensing system, and the compressor provides refrigerant a preset pressure to the evaporator via the first electronic expansion valve, so that the evaporator converts the condensed water in the host system into the water vapor.

In an embodiment of this application, a pressure of the refrigerant flowing through the first electronic expansion valve is controlled to reach the preset pressure by adjusting an opening degree of the first electronic expansion valve, so that a saturation temperature of the refrigerant at the preset pressure is higher than a temperature in the host system by a first temperature threshold.

In an embodiment of this application, the host system further includes a blower, and the blower is configured to sufficiently remove moisture attached to an outer wall of the evaporator and an inner wall of the air conditioner host.

In an embodiment of this application, a second electronic expansion valve is arranged between the host system and the compression system, and a pressure of the refrigerant flowing through the second electronic expansion valve is controlled by adjusting an opening degree of the second electronic expansion valve, so that the pressure of the refrigerant decreases to a suction pressure value that meets a requirement of the compressor.

In an embodiment of this application, two ends of the compression system are connected to each other by using a third electronic expansion valve. When suction superheat of the compressor is higher than a suction superheat threshold, the third electronic expansion valve is closed; or when the suction superheat of the compressor is lower than the suction superheat threshold, the third electronic expansion valve is opened, and two ends of the compression system are directly in communication with each other.

In an embodiment of this application, the compression system further includes a suction superheat detection apparatus, the suction superheat threshold is preset for the suction superheat detection apparatus, and the suction superheat detection apparatus detects the suction superheat of the compressor.

In an embodiment of this application, a gas-liquid separator is arranged between the host system and the compression system, and refrigerant released by the compression system flows through the condensing system, the host system, and the gas-liquid separator in sequence via the pipeline, and finally flows back to the compression system.

In an embodiment of this application, when a temperature of the pipeline between the compression system and the condensing system is higher than a second temperature threshold, the compressor increases operating power to increase a suction temperature of the compressor.

In an embodiment of this application, a temperature sensor is arranged on the pipeline, and the temperature sensor is configured to detect a temperature of the pipeline between the compression system and the condensing system.

An embodiment of this application further provides a thermal management method for an air conditioner, applied to a thermal management system of the air conditioner. The thermal management system includes: a host system, where the host system includes an air conditioner host including an evaporator; a condensing system, where the condensing system includes a condenser, and one end of the condensing system is in communication with the host system via a pipeline; and a compression system, where the compression system includes a compressor, and the compression system is in communication with the host system and the condensing system via a pipeline. The thermal management method includes: turning on a compressor, where when the thermal management system of the air conditioner works, the condensing system does not perform thermal exchange, the compressor provides thermal to the evaporator, and the evaporator converts condensed water on a surface of the evaporator into water vapor.

In an embodiment of this application, the host system further includes a blower, and the thermal management method further includes: turning on the blower to supply air, so as to sufficiently remove moisture attached to an outer wall of the evaporator and an inner wall of the air conditioner.

In an embodiment of this application, a first electronic expansion valve is arranged between the host system and the condensing system, and the method further includes: adjusting the first electronic expansion valve, so that the compressor provides refrigerant with a preset pressure to the evaporator by using the first electronic expansion valve, and the evaporator converts condensed water in the host system into water vapor.

In an embodiment of this application, the operation of adjusting the first electronic expansion valve includes: adjusting an opening degree of the first electronic expansion valve, so as to control a pressure of the refrigerant flowing through the first electronic expansion valve to reach the preset pressure, so that a saturation temperature of the refrigerant at the preset pressure is higher than a temperature in the host system by a first temperature threshold.

In an embodiment of this application, a second electronic expansion valve is arranged between the host system and the compression system. The method further includes: adjusting an opening degree of the second electronic expansion valve, so as to control a pressure of the refrigerant flowing through the second electronic expansion valve, so that the pressure of the refrigerant decreases to a suction pressure value that meets a requirement of the compressor.

In an embodiment of this application, two ends of the compression system are connected to each other by using a third electronic expansion valve. The method further includes: when suction superheat of the compressor is higher than a suction superheat threshold, controlling the third electronic expansion valve to be closed; or when the suction superheat of the compressor is lower than the suction superheat threshold, controlling the third electronic expansion valve to be opened, so that two ends of the compression system are directly in communication with each other.

In an embodiment of this application, the compression system further includes a suction superheat detection apparatus, the suction superheat threshold is preset for the suction superheat detection apparatus, and the suction superheat detection apparatus detects the suction superheat of the compressor.

In an embodiment of this application, a gas-liquid separator is arranged between the host system and the compression system. The method further includes: controlling the refrigerant released by the compression system to flow through the condensing system, the host system, and the gas-liquid separator in sequence via the pipeline, and finally flow back to the compression system.

In an embodiment of this application, the method further includes: when a temperature of the pipeline between the compression system and the condensing system is higher than a second temperature threshold, increasing operating power of the compressor to increase a suction temperature of the compressor.

In an embodiment of this application, a temperature sensor is arranged on the pipeline, and the temperature sensor detects a temperature of the pipeline between the compression system and the condensing system.

The thermal management system of the air conditioner according to this application does not rely on an external thermal absorbing element. When the thermal management system of the air conditioner works, the condensing system does not perform thermal exchange, and the evaporator serves as a condenser, so that the condensing water attached to the outer wall of the evaporator and the inner wall of the air conditioner host can be converted to water vapor, thereby effectively removing bad odor generated during operation of the air conditioner system.

### BRIEF DESCRIPTION OF DRAWINGS

To describe the technical solutions of the embodiments of this application more clearly, the following briefly describes the accompanying drawings required for describing the embodiments. Apparently, the accompanying drawings in the following description show merely some embodiments of this application, and a person of ordinary skill in the art may derive other drawings from these accompanying drawings without creative efforts.
FIG. 1 is a schematic diagram of a working principle of a thermal management system according to an embodiment of this application;
FIG. 2 is a schematic structural diagram of a thermal management system according to an embodiment of this application;
FIG. 3 is a flowchart of steps of a thermal management method according to an embodiment of this application.
FIG. 4 is a flowchart of steps of a thermal management method according to another embodiment of this application.

### DESCRIPTION OF EMBODIMENTS

The following describes embodiments of this application by using specific examples. A person skilled in the art may easily understand other advantages and effects of the embodiments of this application by using the content disclosed in this specification. The embodiments of this application may also be implemented or applied in another specific implementation. Details in this specification may also be modified or changed based on different perspectives and applications without departing from the spirit of this embodiment of this application.

It should be noted that, in a case of no conflict, the following embodiments and features in the embodiments may be mutually combined. It should be further understood that the term used in the embodiments of this application is used to describe a specific implementation solution, rather than limit the protection scope of the embodiments of this application. In the following embodiments, test methods without limiting specific conditions are generally performed according to conventional conditions or according to conditions recommended by manufacturers.

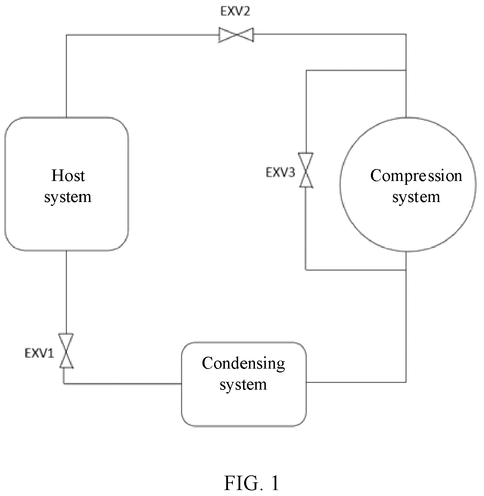

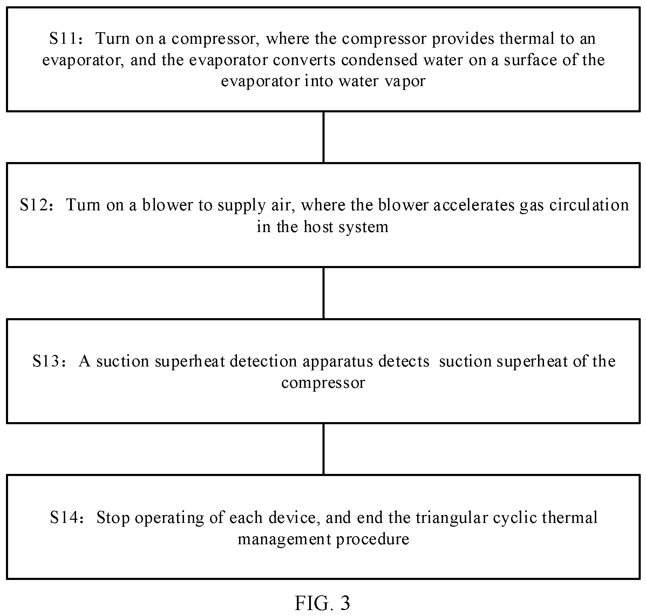

Reference is made to FIG. 1 to FIG. 3. It should be noted that structures, proportions, sizes, and the like shown in the accompanying drawings of this application are used only to describe the content disclosed in the specification, so that a person skilled in the art can understand and read the specification; and are not used to limit a condition in which the embodiments of this application may be implemented. Therefore, the structures, proportions, sizes, and the like shown in the accompanying drawings are not intended to express technical essence. Any modification of the structure, change of the proportion relationship, or adjustment of the size shall fall within the scope of the content disclosed by the embodiments of this application, without affecting a function and a purpose that can be achieved by the embodiments of this application. In addition, terms such as "top", "bottom", "left", "right", "middle", and "one" that are referenced in this specification are merely used for ease of description, and are not intended to limit the scope of the embodiments of this application. A change or adjustment of a relative relationship of the above terms is also considered to fall within the scope of the embodiments of this application without changing technical content in essence.

Currently, in a refrigeration mode, a temperature of an air conditioner of a vehicle is suddenly reduced to be lower than the dew-point temperature. In this case, condensed water is easy to precipitate from the air, and is attached to a surface of an evaporator or drops into an air conditioner cabinet. As a result, the air conditioner cabinet is in a humid environment for a long time, causing mildew and bad odor. When a temperature of the refrigerant is around 0°C, microorganisms in the air are frozen on the surface of the evaporator. When the air conditioner system stops due to a compressor rotation speed being limited based on a control policy, a user operation or other factors, the microorganisms are thawed and are blown out with air outputted from the air conditioner, and the bad odor causes a user to feel uncomfortable. According to the existing solution, an activated carbon filter is provided in front of the evaporator to adsorb bad odor. However, the solution can only absorb a part of the odor, and an absorption effect is not good.

In view of this, an embodiment of this application provides a thermal management system of an air conditioner, so as to resolve a problem in the conventional art that bad odor is generated when an air conditioner is turned on. Specifically, the thermal management system of the air conditioner in embodiments of this application includes a host system, a condensing system, and a compression system. The host system includes an air conditioner host includes an evaporator. The evaporator converts condensed water in the host system into water vapor. The condensing system includes a condenser. One end of the condensing system is in communication with the host system via a pipeline. The compression system includes a compressor. The compression system is in communication with the host system and the condensing system via a pipeline, and the compressor provides thermal to the evaporator. That is, when the thermal management system of the air conditioner works, the condensing system does not perform thermal exchange, the compressor may provide thermal to the evaporator, and the evaporator converts condensed water in the host system into water vapor by using the thermal.

In some implementations, a first electronic expansion valve is arranged between the host system and the condensing system, a second electronic expansion valve is arranged between the host system and the compression system, two ends of the compression system are connected to each other by using a third electronic expansion valve. When the third electronic expansion valve is opened, the two ends of the compression system are directly in communication with each other.

In embodiments of this application, a surface of the evaporator is heated by using refrigerant, to remove moisture in the evaporator and the air conditioner cabinet. Further, to prevent moisture from occurring in the air conditioner cabinet, air circulation in the host system is accelerated by a blower according to embodiments of this application, thereby improving a drying effect. Therefore, mold generation is prevented, and a problem that bad odor is generated when the air conditioner is turned on is resolved. In addition, the system operates stably by using a triangular cycle without relying on an external thermal absorbing element. In a drying process, 1 to 3 thermal management system components are unnecessary to operate, for example, a fan and a water pump are unnecessary to operate, thereby avoiding a problem of noise, vibration, and noise vibration harshness (noise, vibration, harshness, NVH). In addition, it is unnecessary to absorb heat from a battery, thereby preventing a temperature of a battery cell from being too low. In this solution, the evaporator serves as a condenser, and the blower is turned on to supply air, so that not only moisture on an air duct and a housing of the air conditioner cabinet can be removed, but also moisture on the evaporator core and a surrounding sponge sealing member of the evaporator core can be removed. According to an existing solution, water is removed by using a positive temperature coefficient (positive temperature coefficient, PTC) thermistor or an internal condenser, only a part of the air duct of the air conditioner cabinet can be dried, and water on the evaporator core cannot be removed. Therefore, a better drying effect can be achieved by the technical solution of this application.

In some implementations, a branch pipeline is provided between two ends of the compressor, and a third electronic expansion valve is arranged on the branch pipeline. When the suction superheat is low, the branch may be switched on (that is, the third electronic expansion valve is opened), so that the two ends of the compressor are directly in communication with each other, thereby effectively increasing dryness of the main pipeline, thus avoiding problems such as liquid return of the compressor and incomplete evaporation of the refrigerant.

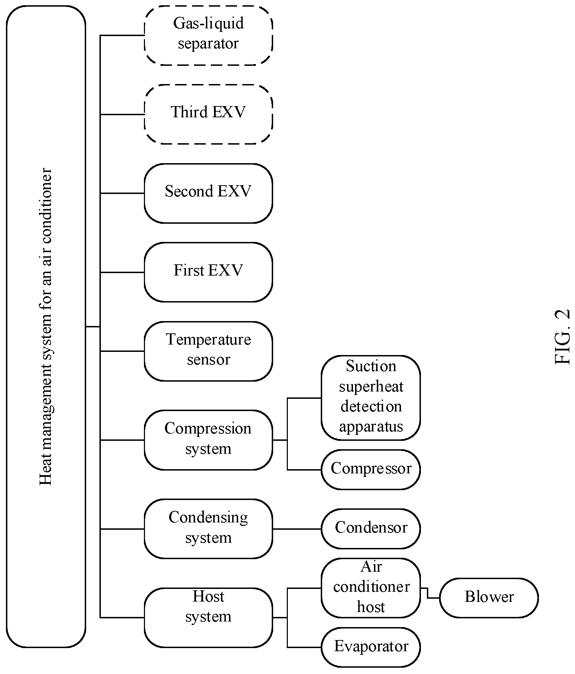

As shown in FIG. 1 and FIG. 2, an air conditioner triangular cyclic thermal management system provided in an embodiment of this application includes a host system, a condensing system, and a compression system. The host system, the condensing system, and the compression system are in communication with each other via a pipeline. A first electronic expansion valve may be arranged on a pipeline between the host system and the condensing system. A second electronic expansion valve may be arranged on a pipeline between the host system and the compression system. Two ends of the compression system are directly in communication with each other via a pipeline to form a branch, and a third electronic expansion valve may be arranged on the branch. The first electronic expansion valve and the second electronic expansion valve are in a normally open state, and the third electronic expansion valve is in a normally closed state.

In some implementations, the first electronic expansion valve and the second electronic expansion valve are in a normally open state, and the pressure of the refrigerant flowing through the pipeline may be adjusted by controlling the opening degrees of the two electronic expansion valves.

For example, when the refrigerant flows from the condenser to the host system, the opening degree of the first electronic expansion valve may be adjusted, so as to provide refrigerant with a preset pressure (that is, the refrigerant is subjected to restriction by the first expansion valve, thus a pressure of the refrigerant reaches a specified pressure value) to the evaporator, and the evaporator converts condensed water in the host system into water vapor.

For another example, after the refrigerant is subjected to the restriction of the first expansion valve, the pressure of the refrigerant reaches a specified pressure value. In this case, a saturation temperature of the refrigerant at the pressure value is higher than a temperature in the host system, and a difference between the saturation temperature and the temperature in the host system is greater than a first temperature threshold (that is, the pressure of the refrigerant flowing through the first electronic expansion valve is controlled by adjusting the opening degree of the first electronic expansion valve, to reach a preset pressure value, so that the saturation temperature of the refrigerant at the preset pressure value is higher than the temperature in the host system by a preset temperature difference), and the first temperature threshold (which may also be referred to as a preset temperature difference) may be, for example, 10~20°C. The air conditioner system in the vehicle is used as an example. When the refrigerant flows from the condenser to the host system, the refrigerant is subjected to restriction of the first expansion valve, the pressure of the refrigerant reaches a specified pressure value, and a saturation temperature of the refrigerant at the pressure value is higher than a temperature in the host system by 10-20°C. Further, the surface of the evaporator is heated to evaporate the condensed water, and the blower supplies air to increase evaporation efficiency of the evaporator.

It should be noted that the temperature in the host system in embodiments of this application may be an air temperature at a location behind the evaporator in the host system. The vehicle air conditioner system is used as an example. The temperature in the host system may refer to the air temperature of a vehicle cabin behind the evaporator.

Still referring to FIG. 2, the host system is an air conditioner host including an evaporator. When the thermal management system of the air conditioner works, the evaporator may dissipate thermal, so that condensed water on an inner wall of a housing of the air conditioner host and on a core of the evaporator is converted to water vapor. It should be understood that when the thermal management system of the air conditioner works, the evaporator serves as a condenser.

Still referring to FIG. 2, the air conditioner host may further include a blower, and the blower may accelerate air circulation in the host system. It should be understood that in a process in which the evaporator converts condensed water in the host system into water vapor by using the thermal provided by the compressor, the blower is also turned on, and the blower may be configured to blow the water vapor to depart from the host system. Certainly, the blower may be further configured to sufficiently remove moisture attached to the outer wall of the evaporator and the inner wall of the air conditioning host.

An air conditioner system of a vehicle is used as an example. When a blower is turned on, a gas flow speed in the host system may be increased, and water vapor in the pipeline is transmitted to a vehicle cabin.

Still referring to FIG. 2, the condensing system includes a condenser, and the condenser achieves a condensing effect in a refrigeration working condition. In embodiments of this application, a type of the condenser is not limited. The condenser may be an air source condenser, or may be a water condenser.

Still referring to FIG. 2, the compression system includes a compressor and a suction superheat detection apparatus. The suction superheat detection apparatus may be configured to detect suction superheat of the compressor. In some implementations, the suction superheat detection apparatus is installed in the compressor. In some implementations, a suction superheat threshold may be preset for the suction superheat detection apparatus.

The compressor works on the refrigerant to increase the temperature of the refrigerant, to heat the evaporator core, and to remove the moisture on the evaporator surface, so that the condensed water on the inner wall of housing of the air conditioner host and the core of the evaporator is converted into water vapor. That is, the compressor may provide thermal to the evaporator, that is, the compressor may provide a refrigerant flow carrying thermal to the evaporator via a refrigerant pipeline. Further, the blower is turned on to supply air, thereby achieving a good drying effect.

In some implementations, a pipeline is provided between an input end and an output end of the compression system, and the pipeline forms a branch of the thermal management system. A third electronic expansion valve is arranged on the branch, and the third electronic expansion valve is in a normally closed state. Certainly, the third electronic expansion valve may be controlled to be in an open state or a closed state according to different working conditions. For example, when the thermal management system works, if the suction superheat of the compressor is higher than the suction superheat threshold, the third electronic expansion valve may be controlled to be closed. For another example, if the suction superheat of the compressor is lower than the suction superheat threshold, the third electronic expansion valve may be controlled to be open, and two ends of the compression system are directly in communication with each other. The suction superheat threshold may be set according to a requirement.

In some implementations, the suction superheat detector in the compressor may detect the suction superheat of the compressor in real time, that is, the suction superheat detected by the suction superheat detector is the suction superheat of the compressor. A suction superheat threshold is preset for the suction superheat detector. When the suction superheat is excessively low, a wet stroke and slugging may be caused, and a problem of low oil temperature and large viscosity may also be caused, which affects lubrication performance of the compressor. Therefore, in embodiments of this application, a branch including a third electronic expansion valve and a pipeline is provided to resolve a problem of excessively low suction superheat. When the suction superheat detection apparatus detects that the suction superheat is less than the preset suction superheat threshold, the third electric expansion valve switches from a normally closed state to an open state, and two ends of the compressor are directly in communication with each other via a refrigerant pipeline, forming a branch connected in parallel with the main pipeline of the thermal management system. When the branch is switched on, gas flowing through the compressor is split, so that a gas flow rate of the main pipeline of the system is reduced, thereby improving the suction superheat and increasing dryness at an outlet of the second electronic expansion valve.

In some implementations, a temperature sensor may be arranged on a pipeline between the compression system and the condensing system to detect a temperature of the pipeline.

In some implementations, when the temperature sensor detects a relatively high pipeline temperature, the compressor suction temperature may be increased. For example, when the temperature of the pipeline between the compression system and the condensing system is relatively high (for example, the temperature of the pipeline is higher than a second temperature threshold), the compressor increases the operating power to increase the suction temperature of the compressor. The second temperature threshold may be set according to a requirement.

In some implementations, when the temperature of the pipeline between the compression system and the condensing system is relatively high, the third electronic expansion valve may be opened first. After the third electronic expansion valve is opened, if a temperature of a refrigerant pipeline is relatively high (a temperature of the pipeline is higher than a second temperature threshold), output power of the compressor is increased to increase a suction temperature of the compressor, thereby ensuring that refrigerant at an inlet of the compressor is sufficiently liquified, and improving stability of long-term operation of the system.

It should be understood that when the thermal management system works, and when the suction dryness is excessively low, a wet stroke and slugging may be caused, and a problem of low oil temperature and large viscosity may also be caused, which affects lubrication performance of the compressor.

In some implementations, the compression system includes a compressor and a suction dryness detection apparatus, and the suction dryness detection apparatus is installed in a compressor. The suction dryness detector in the compressor may be configured to detect the suction dryness of the compressor in real time. In some implementations, a suction dryness threshold is preset for the suction dryness detector.

To resolve the foregoing problem, in another embodiment of this application, a gas-liquid separator may be arranged at a suction end of the compressor. When the suction dryness detection apparatus detects that the suction dryness is less than a preset suction dryness threshold, the gas-liquid separator operates until the suction dryness meets a working requirement of the compressor, thereby increasing dryness at the outlet of the second electronic expansion valve.

In some implementations, after flowing through the host system, the refrigerant is subjected to restriction of the second electronic expansion valve, so that a pressure of the refrigerant is reduced to a suction pressure value that meets a requirement of the compressor by adjusting an opening degree of the second expansion valve. Then, the refrigerant enters the gas-liquid separator to increase the dryness of the refrigerant, and finally enters a suction port of the compressor, thereby completing refrigerant cycle.

It should be noted that the device in the dotted line box in FIG. 2 is optional. For example, the air conditioner system in this application may be provided with a third electronic expansion valve, and is not provided with an air-liquid separator. For another example, the air conditioner system in this application may be provided with an air-liquid separator, and is not provided with a third electronic expansion valve. Certainly, the air conditioner system in this application may be provided with both a third electronic expansion valve and a gas-liquid separator. Specific configuration of the air conditioner system is not limited in this application.

In an embodiment of the application, after the evaporator stops the refrigeration, condensate water is hung on the surface of the evaporator. In this case, the compressor is turned on, and high-temperature and high-pressure refrigerant enters the condenser. The condenser may be an air-cooled condenser or a water condenser. An air conditioner system in a vehicle is used as an example. When the condenser is an air-cooled condenser, a condensing fan is not turned on, and a vehicle with an active grille system (active grille system, AGS) may shut down front-end air intake, and the condenser does not dissipate thermal. If the condenser is water condenser, a condensing water pump is turned off. The refrigerant only flows through the condenser without performing any thermal exchange. Then, the refrigerant is subjected to restriction of the EXV1 (first electronic expansion valve) to control the pressure of the refrigerant flowing into the evaporator, so that a saturation temperature of the refrigerant at the pressure is higher than a temperature in the cabin by 10~20°C, and the thermal rejection of the system is controlled. In this case, the evaporator serves as the condenser, the compressor provides thermal to the evaporator by transmitting the refrigerant to the evaporator, and the thermal outputted from the evaporator removes the condensed water on the side wall of the air conditioner host and the core of the evaporator. The condensed water on the surface of the air conditioner host and the evaporator core is converted into water vapor under the action of the thermal, and the water vapor flows rapidly in the host system by means of the blower. After flowing through the evaporator, the saturated/supercooled refrigerant is subjected to restriction of the EXV2 (second electronic expansion valve) to enter a two-phase region, and the pressure of the refrigerant is reduced to a suction pressure value that meets a requirement of the compressor. Then, the refrigerant enters the gas-liquid separator to improve the dryness, and finally enters the compressor suction port to complete the cycle. Because no evaporation is not included in the above process, a triangular cycle is presented in a drawn pressure-enthalpy diagram (therefore, the thermal management system of the air conditioner in this application may also be referred to as a triangular cycle thermal management system of the air conditioner). The refrigerant flows through the condensing system, the first electronic expansion valve, the host system, the second electronic expansion valve, the gas-liquid separator (or the third electronic expansion valve) in sequence, and finally flows back to the compressor. When the refrigerant flows through the condensing system, thermal exchange is not performed. When the refrigerant flows through the first electronic expansion valve and the second electronic expansion valve, a pressure of the refrigerant is changed according to a requirement. When the refrigerant flows through the host system, thermal exchange is performed to provide thermal for the evaporator. When the refrigerant flows through the gas-liquid separator (or the third electronic expansion valve), dryness of the refrigerant is improved.

In an embodiment of this application, when a thermal management system of an air conditioner works, a compressor is first turned on, the compressor provides thermal to an evaporator, and thermal outputted by the evaporator acts on a side wall of an air conditioner host and an evaporator core. Condensing water on the surface of the air conditioner host and the evaporator core is converted into water vapor under the action of the thermal. The blower accelerates the gas circulation in the host system, so that water vapor is transmitted into the vehicle cabin. When the suction superheat detection apparatus in the compression system detects that the suction superheat is excessively low, the third electronic expansion valve is opened, so that two ends of the compressor are directly in communication with each other, and thus a gas flow of the main pipeline is split.

The foregoing describes the thermal management system according to the embodiments of this application in detail with reference to FIG. 1 to FIG. 2. The following describes embodiments of a thermal management method of this application in detail. It should be understood that the description of the thermal management method embodiments corresponds to the description of the thermal management system embodiments. Therefore, for a part not described herein in detail, reference may be made to the foregoing thermal management system embodiment.

An embodiment of this application further provides a thermal management method for an air conditioner, applied to a thermal management system of an air conditioner. The thermal management system includes: a host system, where the host system includes an air conditioner host including an evaporator; a condensing system, where the condensing system includes a condenser, one end of the condensing system is in communication with the host system via a pipeline; and a compression system, where the compression system includes a compressor, and the compression system is in communication with the host system and the condensing system via a pipeline. The thermal management method includes: S11: turning on a compressor, where the compressor provides thermal to the evaporator, and the evaporator converts condensed water on a surface of the evaporator into water vapor. That is, when the compressor is turned on and the thermal management system of the air conditioner works, the condensing system does not perform thermal exchange, the compressor provides thermal to the evaporator, and the evaporator converts condensed water on the surface of the evaporator into water vapor.

In some implementations, the thermal management method further includes: S12: turning on the blower to supply air, where the blower accelerates gas circulation in the host system. The blower is configured to sufficiently remove the moisture attached to the outer wall of the evaporator and the inner wall of the air conditioner host.

In some implementations, the thermal management method further includes: controlling the third electronic expansion valve to be closed if the suction superheat of the compressor is higher than the suction superheat threshold. Certainly, if the suction superheat of the compressor is lower than the suction superheat threshold, the third electronic expansion valve is controlled to be open, so that two ends of the compression system are directly in communication with each other. For example, in step S13, the suction superheat detection apparatus detects suction superheat of the compressor. When the suction superheat is less than the suction superheat threshold, the third electronic expansion valve connected to two ends of the compressor is opened.

In some implementations, the thermal management method further includes: S14, stopping operating of each device, and ending a triangular cyclic thermal management procedure.

As shown in FIG. 1 to FIG. 3, the evaporator is arranged in the air conditioner host, and the air conditioner host is in communication with a compressor and a condenser via a pipeline. A temperature sensor is arranged on a pipeline between the compression system and the condensing system. In S13, after the third electronic expansion valve is opened, when the temperature sensor detects that the pipeline temperature is relatively high, a suction temperature of the compressor increases. A first electronic expansion valve is arranged between the condenser and the air conditioner host, a second electronic expansion valve is arranged between the air conditioner host and the compression system, and the first electronic expansion valve and the second electronic expansion valve are in a normally open state.

In S11, when the thermal management system of the air conditioner works, the compressor transmits high-temperature and high-pressure refrigerant to the condenser. In embodiments of this application, a type of the condenser is not limited, and the condenser may be an air source condenser or a water condenser. An air conditioner system in a vehicle is used as an example. When a condenser is an air-cooled condenser, a condenser fan is not turned on. A vehicle with the AGS may shut down front-end air intake, and the condenser does not dissipate thermal. If the condenser is water condenser, a condensing water pump is turned off. The refrigerant flows through the condenser without performing any thermal exchange, and then the refrigerant is subjected to restriction of the EXV1 (the first electronic expansion valve), so as to control a pressure of the refrigerant flowing into the evaporator (adjust the opening degree of the first electronic expansion valve, so as to provide the refrigerant with the preset pressure to the evaporator, and the evaporator converts the condensed water in the host system into water vapor). Therefore, a saturation temperature of the refrigerant at the pressure is higher than a temperature in the host system (for example, a temperature in a vehicle cabin), and a difference between the saturation temperature and the temperature in the host system is greater than a first temperature threshold, where the first temperature threshold may be, for example, 10~20°C. An air conditioner system in a vehicle is used as an example. A refrigerant is subjected to restriction of the EXV1, to control a pressure of the refrigerant entering the evaporator, so that a saturation temperature of the refrigerant at the pressure is higher than a temperature of a vehicle cabin by 10~20°C, and thermal rejection of the system is controlled. In this case, the evaporator serves as a condenser, and the compressor transmits the refrigerant to the evaporator, so as to provide thermal to the evaporator. Thermal outputted by the evaporator acts on a side wall of the air conditioner host and the evaporator core to evaporate the condensed water.

In S12, the condensed water on the surface of the air conditioner host and of the evaporator core is converted into water vapor under the action of the thermal, and the water vapor flows rapidly in the host system by means of the blower.

In S13, the suction superheat detection apparatus detects the suction superheat of the compressor, and a suction superheat threshold is preset for the detection apparatus. When the detected suction superheat is lower than a preset suction superheat threshold, the third electronic expansion valve connected to two ends of the compressor is opened.

Embodiments of this application provide a thermal management system and a thermal management method for an air conditioner. A branch connected to two ends of the compressor is provided, so that the branch can be switched on by the compressor when the suction superheat is low, thereby effectively increasing dryness of the main circuit and improving operating stability of the system.

According to the thermal management system and the thermal management method for an air conditioner in embodiments of this application, when condensing water on a surface of the evaporator is evaporated in a triangular cyclic process, whether to open a hot air bypass valve, that is, the third electronic expansion valve, is dynamically determined according to feedback of the suction superheat. When it is monitored that the suction superheat of the compressor is insufficient, a EXV3 (the third electronic expansion valve) is opened to split an exhaust mass flow rate of the compressor, so that the EXV3 circuit and the system main circuit form a parallel relationship, a flow rate of the system main circuit is reduced, and a dryness at an outlet of the EXV2 can be increased. In addition, after being subjected to restriction of the EXV3, the refrigerant still has a relatively high temperature, thereby increasing a suction temperature of the compressor, ensuring that the refrigerant is sufficiently gasified at an inlet of the compressor, and improving stability of long-term operating of the system.

This application further provides a triangular cyclic thermal management method for resolving a problem of bad odor generated when an air conditioner is generated. The method includes: S21 to S24. In S21, a compressor releases a refrigerant, and the refrigerant flows into a condenser. In S22, the refrigerant flows from the condenser to the evaporator through the first electronic expansion valve. In S23, the refrigerant flows from the host system to the gas-liquid separator through the second electronic expansion valve. In S24, the refrigerant flows from the gas-liquid separator to the compressor, and the cycle ends.

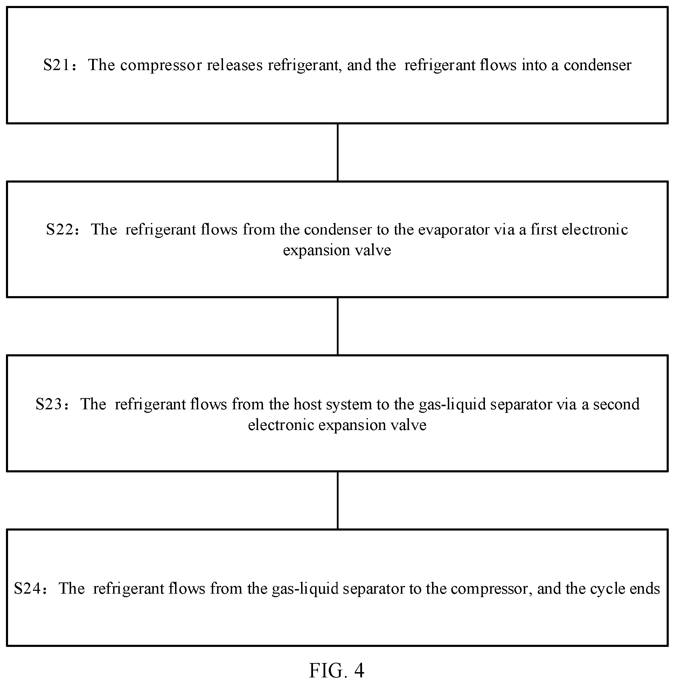

As shown in FIG. 2 and FIG. 4, the evaporator is arranged in the air conditioner host, and the air conditioner host is in communication with the compressor and the condenser via a pipeline. A temperature sensor is further arranged on the pipeline between the compression system and the condensing system. In S22, when the refrigerant flows through the first expansion valve, a pressure of the refrigerant is adjusted by adjusting an opening degree of the first expansion valve, so that a saturation temperature of the refrigerant at this pressure is higher than a temperature in the host system by 10~20°C (for example, 15°C), and the evaporator evaporates condensed water on a surface of the evaporator under action of the refrigerant. In S23, when the refrigerant flows through the second expansion valve, the pressure of the refrigerant is adjusted by adjusting the opening degree of the second expansion valve, so that the pressure of the refrigerant decreases to a suction pressure value that meets a requirement of the compressor. When the refrigerant enters the gas-liquid separator, the gas-liquid separator improves the dryness of the refrigerant.

This application provides a triangular cyclic thermal management system and method for removing bad odor of a vehicle air conditioner. The pressure of the refrigerant may be controlled by using two electronic expansion valves, so that the pressure of the refrigerant meets a working requirement of the evaporator and the compressor. The air-liquid separator that can improve suction dryness is arranged at a suction end of the compressor.

Therefore, by using the thermal management system and the thermal management method for the air conditioner in embodiments of this application, a problem of bad odor of the air conditioner can be resolved.

The foregoing embodiments only illustrate principles and functions of the embodiments of this application, but are not intended to limit the embodiments of this application. Any person skilled in the art may modify or change the foregoing embodiments without departing from the spirit and scope of the embodiments of this application. Therefore, any equivalent modification or change made by a person of ordinary skill in the art without departing from the spirit and technical concept disclosed by the embodiments of this application shall fall within the protection scope defined by the claims of this application.

## Claims

1. A thermal management system of an air conditioner, comprising:
a host system, wherein the host system comprises an air conditioner host comprising an evaporator;
a condensing system, wherein the condensing system comprises a condenser, and one end of the condensing system is in communication with the host system via a pipeline; and
a compression system, wherein the compression system comprises a compressor, and the compression system is in communication with the host system and the condensing system via a pipeline,
wherein when the thermal management system of the air conditioner works, the condensing system does not perform thermal exchange, the compressor provides thermal for the evaporator, and the evaporator converts, by using the thermal, condensed water in the host system into water vapor.

2. The thermal management system according to claim 1, wherein a first electronic expansion valve is arranged between the host system and the condensing system, and the compressor provides refrigerant with a preset pressure to the evaporator via the first electronic expansion valve, so that the evaporator converts the condensed water in the host system into the water vapor.

3. The thermal management system according to claim 2, wherein a pressure of the refrigerant flowing through the first electronic expansion valve is controlled to reach the preset pressure by adjusting an opening degree of the first electronic expansion valve, so that a saturation temperature of the refrigerant at the preset pressure is higher than a temperature in the host system by a first temperature threshold.

4. The thermal management system according to any one of claims 1 to 3, wherein the host system further comprises a blower, and the blower is configured to sufficiently remove moisture attached to an outer wall of the evaporator and an inner wall of the air conditioner host.

5. The thermal management system according to any one of claims 1 to 4, wherein a second electronic expansion valve is arranged between the host system and the compression system, and a pressure of refrigerant flowing through the second electronic expansion valve is controlled by adjusting an opening degree of the second electronic expansion valve, so that the pressure of the refrigerant decreases to a suction pressure value that meets a requirement of the compressor.

6. The thermal management system according to any one of claims 1 to 5, wherein a gas-liquid separator is arranged between the host system and the compression system, and refrigerant released by the compression system flows through the condensing system, the host system, and the gas-liquid separator in sequence via the pipeline, and finally flows back to the compression system.

7. The thermal management system according to any one of claims 1 to 5, wherein two ends of the compression system are connected to each other by using a third electronic expansion valve;
wherein
when suction superheat of the compressor is higher than a suction superheat threshold, the third electronic expansion valve is closed; or
when the suction superheat of the compressor is lower than the suction superheat threshold, the third electronic expansion valve is opened, and two ends of the compression system are directly in communication with each other.

8. The thermal management system according to claim 7, wherein the compression system further comprises a suction superheat detection apparatus, the suction superheat threshold is preset for the suction superheat detection apparatus, and the suction superheat detection apparatus is configured to detect the suction superheat of the compressor.

9. The thermal management system according to claim 7 or 8, wherein after the third electronic expansion valve is opened and when a temperature of the pipeline between the compression system and the condensing system is higher than a second temperature threshold, the compressor increases operating power to increase a suction temperature of the compressor.

10. The thermal management system according to claim 9, wherein a temperature sensor is arranged on the pipeline, and the temperature sensor is configured to detect a temperature of the pipeline between the compression system and the condensing system.

11. A thermal management method for an air conditioner, applied to a thermal management system of the air conditioner, wherein the thermal management system comprises:
a host system, wherein the host system comprises an air conditioner host comprising an evaporator;
a condensing system, wherein the condensing system comprises a condenser, and one end of the condensing system is in communication with the host system via a pipeline; and
a compression system, wherein the compression system comprises a compressor, and the compression system is in communication with the host system and the condensing system via a pipeline;
wherein the thermal management method comprises:
turning on a compressor, wherein when the thermal management system of the air conditioner works, the condensing system does not perform thermal exchange, the compressor provides thermal to the evaporator, and the evaporator converts condensed water on a surface of the evaporator to water vapor.

12. The thermal management method according to claim 11, wherein the host system further comprises a blower, and the thermal management method further comprises:
turning on the blower to supply air, so as to sufficiently remove moisture attached to an outer wall of the evaporator and an inner wall of the air conditioner host.

13. The thermal management method according to claim 11 or 12, wherein a first electronic expansion valve is arranged between the host system and the condensing system, and the method further comprises:
adjusting the first electronic expansion valve, so that the compressor provides refrigerant with a preset pressure to the evaporator via the first electronic expansion valve, and the evaporator converts condensed water in the host system into water vapor.

14. The thermal management method according to claim 13, wherein the adjusting the first electronic expansion valve comprises:
adjusting an opening degree of the first electronic expansion valve, so as to control a pressure of the refrigerant flowing through the first electronic expansion valve to reach the preset pressure, so that a saturation temperature of the refrigerant at the preset pressure is higher than a temperature in the host system by a first temperature threshold.

15. The thermal management method according to any one of claims 11 to 14, wherein a second electronic expansion valve is arranged between the host system and the compression system, and the method further comprises:
adjusting an opening degree of the second electronic expansion valve, so as to control a pressure of the refrigerant flowing through the second electronic expansion valve, so that the pressure of the refrigerant decreases to a suction pressure value that meets a requirement of the compressor.

16. The thermal management method according to any one of claims 11 to 15, wherein a gas-liquid separator is arranged between the host system and the compression system, and the method further comprises:
controlling refrigerant released by the compression system to flow through the condensing system, the host system, and the gas-liquid separator in sequence via the pipeline, and finally flow back to the compression system.

17. The thermal management method according to any one of claims 11 to 15, wherein two ends of the compression system are connected to each other by using a third electronic expansion valve, and the method further comprises:
when suction superheat of the compressor is higher than a suction superheat threshold, controlling the third electronic expansion valve to be closed; or
when the suction superheat of the compressor is lower than the suction superheat threshold, controlling the third electronic expansion valve to be open, so that two ends of the compression system are directly in communication with each other.

18. The thermal management method according to claim 17, wherein the compression system further comprises a suction superheat detection apparatus, the suction superheat threshold is preset for the suction superheat detection apparatus, and the suction superheat detection apparatus detects the suction superheat of the compressor.

19. The thermal management method according to claim 17 or 18, further comprising:
increasing operating power of the compressor to increase a suction temperature of the compressor, after the third electronic expansion valve is opened and when a temperature of the pipeline between the compression system and the condensing system is higher than a second temperature threshold.

20. The thermal management method according to claim 19, wherein a temperature sensor is arranged on the pipeline, and the temperature sensor detects a temperature of the pipeline between the compression system and the condensing system.
